**Europäisches Patentamt**

**European Patent Office**

**Office européen des brevets**

(19)

(11) Numéro de publication: **0 043 962 B1**

(12) **FASCICULE DE BREVET EUROPEEN**

(45) Date de publication du fascicule du brevet: **29.08.84**

(51) Int. Cl.³: **A 23 C 19/086, A 23 C 19/028**

(21) Numéro de dépôt: **81104956.8**

(22) Date de dépôt: **26.06.81**

(54) **Procédé de fabrication d'un fromage en poudre pasteurisé.**

(30) Priorité: **11.07.80 CH 5333/80**

(43) Date de publication de la demande: **20.01.82 Bulletin 82/3**

(45) Mention de la délivrance du brevet: **29.08.84 Bulletin 84/35**

(84) Etats contractants désignés: **BE DE FR GB IT NL SE**

(56) Documents cités:
**DE - A - 2 501 854**
**FR - A - 2 197 521**
**FR - A - 2 218 821**
**FR - A - 2 239 208**
**FR - A - 2 316 877**
**FR - A - 2 360 258**
**FR - A - 2 397 156**
**GB - A - 2 035 330**
**US - A - 2 015 258**

**Fundamentals of Dairy Chemistry, pp. 615, 616**
**Cheese and fermented milk foods, pp. 184-188**

(73) Titulaire: **SOCIETE DES PRODUITS NESTLE S.A., Case postale 353, CH-1800 Vevey (CH)**

(72) Inventeur: **Buhler, Marcel, La Musardière, CH-1111 Tolochenaz (CH)**
Inventeur: **Olofsson, Mats, Langgatan 10, S-265 00 Astorp (SE)**

## Description

La présente invention an pour objet un procédé de fabrication d'un fromage en poudre pasteurisé qui présente, après reconstitution, les propriétés de la Mozzarella, dans lequel on diminiralise partiellement un lait, on ajuste son pH, on standardise sa teneur en matière grasse et on le sèche par pulvérisation.

On sait que la Mozzarella est un fromage qui possède des propriétés filantes et qui est utilisé, en gros tonnages, dans la confection des pizzas. Les procédés de fabrication de Mozzarella, souvent artisanaux, aboutissent généralement à la production d'un caillé très délicat à manipuler. Les opérations unitaires sont nombreuses et longues et entraînent des coûts de fabrication relativement élevés. En outre, la distribution et la conservation de ce fromage pose des problèmes majeurs et les garanties ne sont pas absolues sur le plan bactériologique. Par ailleurs, le fait qu'on ne trouve pratiquement pas dans le commerce d'article conservable contenant tous les ingrédients nécessaires à la confection d'une pizza, y compris le fromage, montre combien il est difficile de mettre à la disposition du public un fromage en poudre dont le goût, l'aspect et les propriétés soient, après reconstitution, ceux de la Mozzarella.

FR-A-2 316.877 décrit un procédé de fabrication de Mozzarella en poudre, mais celui-ci, par la nature de ses opérations unitaires, interdit que le fromage obtenu soit un fromage pasteurisé. Certes, les risques bactériologiques peuvent être aisément contrôles dans un circuit de distribution moderne, mais on ne peut exclure que la Mozzarella en poudre, non pasteurisée, ne traîne trop longtemps sur les rayons d'une épicerie de campagne ou ne soit pas conservée ou utilisée par le consommateur de façon adéquate.

GB-A-2 035 330 décrit un procédé de fabrication d'une poudre de lait par ultrafiltration, dénaturation et séchage par pulvérisation, dans lequel le débit des membranes d'ultrafiltration est augmenté grâce à une pré-dénaturation des protéines. Selon ce document, en conduisant l'ultrafiltration de manière à obtenir un rétentat partiellement décalcifié, en ajustant son pH et en standardisant sa matière grasse avant de le sécher par pulvérisation, on peut obtenir une poudre qui après reconstitution et chauffage présente une texture filante qui lui permet de remplacer un fromage du type Mozzarella. Cependant, cette possibilité ne s'inscrit que marginalement dans le cadre du procédé selon GB-A-2 035 330 et elle est mal adaptée à la production d'un produit spécifique de ce type.

La présente invention a pour but de pallier les défauts de ces procédés connus.

A cet effet, le procédé selon l'invention est caractérisé par le fait que

— l'on prépare une solution colloïdale lactique de départ présentant des rapports protéines/lactose et protéines/calcium au moins deux fois supérieurs à ceux du lait naturel et un pH compris entre 5,0 et 5,5,

— on porte le pH de cette solution à une valeur comprise entre 6,3 et 6,4 et on la pasteurise,

— on la refroidit et l'on en ramène le pH à une valeur comprise entre 5,0 et 5,5,

— et enfin on la sèche de façon à obtenir ledit fromage en poudre.

Par »solution colloïdale lactique«, on entend désigner une solution aqueuse qui est constituée, pour l'essentiel, des composante qu'on rencontre dans le lait animal, et qui en possède les caractéristiques principales.

La première étape du procédé consiste donc à préparer cette solution colloïdale lactique. Dans une première forme d'exécution, cette solution est obtenue par reconstitution dans l'eau, en utilisant par exemple des concentrés ou des poudres de caséine, de lactalbumine si désiré, de lactose, des sels minéraux ... Les proportions sont telles que cette solution présente des rapports protéines/lactose et protéines/calcium au moins deux fois supérieures à ceux du lait naturel. Le pH est ajusté par acidification chimique, avec de l'acide chlorhydrique par exemple. En variante préférée, le pH est ajusté par acidification biologique, en utilisant notamment les ferments acidifiants classiques du lait.

Dans une autre forme d'exécution, la solution colloïdale lactique est préparée par ultrafiltration. De la sorte, on peut obtenir directement, comme rétentats, des produits ayant des rapports protéines/lactose et protéines/calcium plus élevés que ceux du lait mais en oeuvre. Au besoin, notamment pour ajuster le rapport protéines/lactose et le niveau de déminéralisation, on peut diafiltrer, c'est-à-dire diluer le rétentat pendant l'opération d'ultrafiltration. Comme précédemment, le pH est ajusté par voie chimique ou par voie biologique, l'acidification pouvant intervenir par l'intermédiaire de la solution de dilution employée lorsqu'on diafiltre, celle-ci pouvant être un petit-lait de fromagerie par exemple. On peut même ultrafiltrer à chaud si on désire augmenter le débit de produit traité. Dans ce cas particulier, on peut dénaturer au préalable les protéines par chauffage, notamment par injection de vapeur.

En variante préférée, on acidifie un lait entier ou écrémé par voie biologique, jusqu'à un pH compris entre 5,8 et 6,0 seulement. Puis, on ultrafiltre ce lait acidifié et on laisse l'acidification biologique se poursuivre durant l'ultrafiltration, de façon à obtenir, à titre de rétentat, la solution colloïdale lactique de départ qui présente à la fois les rapports précités supérieure à ceux du lait et le pH désiré, compris entre 5,0 et 5,5.

Il convient de mentionner que la mise en oeuvre de l'ultrafiltration présente l'avantage d'un rendement meilleur, puisque les protéines sériques ou lactalbumine sont retenues et se retrouvent finalement dans le fromage en poudre.

En outre, une teneur en lactose acceptable plus élevée est non seulement possible mais encore contrôlable aisément.

L'étage suivante du procédé consiste à relever le pH de la solution à une valeur comprise entre 6,3 et 6,4, ce qui peut être aisément réalisé par addition d'un agent alcalin, tel que l'hydroxyde de sodium par exemple. A ce pH, la pasteurisation devient possible alors, qu'à un pH compris entre 5,0 et 5,5, elle aurait entraîne la précipitation du produit. Cette pasteurisation peut être conduite par injection de vapeur, à une température de 70 à 140° C par exemple.

Lorsque le pH de la solution est compris entre 6,3 et 6,4, on peut ajouter, notamment à chaud, à une température d'environ 55 à 65° C par exemple, une matière grasse telle que l'huile de beurre, l'huile d'arachide ou l'huile de soja ou même une matière grasse à haut point de fusion telle que l'huile de palme hydrogénée, par exemple. Une telle adjonction de matière grasse a pour but de standardiser le fromage en poudre ou bien d'avoir un fromage présentant une teneur en matière grasse normale si la solution colloïdale de départ est une solution écrémée. Bien entendu, si on désire un fromage maigre, on peut partir d'une solution écrémée et ne pas ajouter de matière grasse. De préférence, avant de la pasteuriser, on homogénéise la solution obtenue après addition de matière grasse, avec un appareil Manton Gaulin ou directement par injection de vapeur, par exemple.

L'étape suivante, la ré-acidification de la solution à un pH compris entre 5,0 et 5,5, peut être réalisée, comme pour la solution de départ, par voie chimique ou par voie biologique. De préférence, on opère par voie chimique, par addition d'acide chlorhydrique. Dans ces conditions, le sel formé par suite de la neutralisation et de l'acidification chimique remplace une grande partie au moins du sel que l'on doit sinon ajouter au produit avant séchage. De préférence également, la ré-acidification intervient après refroidissement entre 5 et 10° C.

Enfin, la solution est séchée de manière à obtenir une poudre, le séchage étant rélisable par tout moyen, par exemple dans une tour ou par lyophilisation.

Il importe de relever ici que le procédé selon l'invention se distingue radicalement des procédés traditionnels d'obtention de la Mozzarella. En effet, dans ces derniers, le lait de départ est coagulé, ce qui entraîne une modification physico-chimique des protéines et un chagement profond de leurs propriétés. Au contraire, dans le présent procédé, les protéines peuvent ne pas être modifiées et rester dans leur état natif; il n'y a pas de coagulation.

Le fromage en poudre obtenu est un fromage pasteurisé, qui présente donc des garantoes bactériologiques. Reconstitué dans l'eau, il donne une pâte qui a les propriétés filantes et le comportement de la Mozzarella. Ce fromage peut donc se substituer sans autre au fromage traditionnel, dans la confection des pizzas notamment.

Les exemples suivants illustrent la mise en oeuvre de procédé selin l'invention. Dans ces exemples, les pourcentages sont exprimés en valeurs pondérales.

### Exemple 1

On pasteurise à 72° C pendant 15 s un lait standardisé. Après refroidissement de celui-ci à 37° C, on l'inocule avec un starter lactique thermophile, en laissant l'acidification se poursuivre jusqu'à un pH égal à 5,9. On refroidit alors à 20° C, puis on procédé à une ultrafiltration dans un appareil DDS équipé de membranes type 800. L'ultrafiltration est menée à une température de 20° C, jusqu'à une réduction du volume de 3 à 1, ce qui signifie que le volume du rétentat est le tiers du volume du lait de départ. Durant l'ultrafiltration, l'acidification s'est poursuivie et le rétentat a un pH égal à 5,2.

On remonte ce pH à 6,3 par addition d'une solution d'hydroxyde de sodium, puis pasteurise par injection de vapeur à 80° C pendant 15 s.

Le produit pasteurisé est alors refroidi dans un échangeur à plaques à une température de l'ordre de 8° C et ré-acidifié à pH = 5,2 par addition d'acide chlorhydrique.

Ce produit, qui possède les propriétés filantes, est envoyé dans une tour de séchage d'où recueille une poudre.

Cette poudre, reconstituée dans l'eau, donne une pâte filante, qui ressemble à s'y méprendre à la Mozzarella. Elle peut être employée dans la confection de pizzas.

### Exemple 2

On pasteurise à 75° C pendant 15 s un lait écrémé. On le refroidit à 37° c et on l'inocule avec une culture de ferments lactiques. On laisse l'acidification biologique se poursuivre jusqu'à pH 5,8. On refroidit à 20° C et l'on ultrafiltre dans un appareil ABCOR équipé de membranes HFM 180. On poursuit l'ultrafiltration à température ambiante jusqu'à réduction du volume du rétentat au 1/3 du volume initial. Durant l'ultrafiltration, l'acidification s'est poursuivie et le rétentat a un pH égal à 5,3. On neutralise le rétentat à pH 6,3 avec de l'hydroxyde de sodium et on le chauffe à 50° C. On y ajoute de l'huile de palme hydrogénée ayant une température de 60° C en quantité telle que le produit final contienne 45% de matière grasse sur matière sèche. Le concentré ainsi standardisé est homogénéisé dans un appareil Manton-Gaulin à une pression de 200 bars. On le chauffe à 82° C durant 20 s par injection de vapeur puis on le refroidit à 10° C dans un échangeur de chaleur à plaques. On ajuste son pH à 5,2 avec de l'acide chlorhydrique et on le sèche par pulvérisation.

On obtient une poudre qui présente après reconstitution les propriétés de la Mozzarella, notamment ses propriétés filantes.

Si l'on réhydrate cette poudre avec diverses quantités d'eau comprises entre 40 et 60% en poids et que l'on chauffe à diverses températures comprises entre 50 et 80°C, on obtient à chaque fois une masse pâteuse ressemblant à s'y méprendre à la Mozzarella.

Si l'on hydrate la poudre sans la chauffer et que l'on confectionne une pizza à l'aide de la masse obtenue, cette dernière présente à la sortie du four l'aspect, la texture et le goût de la Mozzarella traditionnelle.

Exemple 3

On réalise la fabrication d'une poudre de la manière décrite à l'exemple 2, à l'exception du fait que l'on utilise du beurre fondu en lieu et place de l'huile de palme hydrogénée. On obtient un produit qui présente les qualités décrites à l'exemple 2.

Exemple 4

A partir de lait écrémé en poudre, on prépare un lait écrémé reconstitué présentant une teneur en matière sèche de 15%. On le stérilise par injection de vapeur à 120°C durant 10 s. On le refroidit à 10°C et on l'acidifie jusqu'à pH 5,2 par addition d'acide chlorhydrique. On l'ultrafiltre et on le diafiltre sur une ligne de fabrication continue équipée de modules ABCOR munis de membranes HFM 180. On conduit cette opération jusqu'à ce que la teneur en lactose du rétentat soit de 20% sur matière sèche. On ajuste alors son pH à 6,3 par addition d'hydroxyde de sodium et on le chauffe à 55°C. On lui ajoute de l'huile de soja portée à 60°C et on le traite à une température de 120°C par injection de vapeur durant 10 s. On le refroidit à 10°C, on ajuste son pH à 5,2 par addition d'HCl et on le sèche par pulvérisation. On obtient une poudre où les particules de graisse sont particulièrement bien liées aux protéines et qui présente après reconstitution les propriétés d'une Mozzarella particulièrement crémeuse.

Exemple 5

On soumet un lait écrémé frais à un traitement thermique à 120°C durant 30 s par injection de vapeur. On l'ultrafiltre à chaud, à une température de 55°C, sur un appareil DDS équipé de membranes 600, ce qui permet d'obtenir un débit supérieure. On recueille un rétentat présentant une teneur en matière sèche de 15%. On le refroidit à 38°C, on l'inocule à raison de 2% d'une culture de ferments lactiques thermophiles additionnée d'activateurs d'acidification et on laisse l'acidification se poursuivre jusqu'à pH 5,3. On opère à ce moment une diafiltration pour ajuster le rapport protéines/lactose et obtenir le niveau de déminéralisation souhaité. On porte le pH à 6,3 par addition de NaOH et l'on ajoute de l'huile de palme hydrogénée de manière à obtenir 45% de matière grasse sur matière sèche. On homogénéise le mélange, on le pasteurise à 85°C, on le refroidit à 10°C, on l'acidifie à pH 5,2 avec de l'acide lactique et on le sèche par pulvérisation. On obtient une poudre qui présente après reconstitution les propriétés de la Mozzarella.

Exemple 6

On reconstitue un lait écrémé à 20% de matière sèche. On le pasteurise à 75°C durant 15 s. On le refroidit à 20°C. On l'ultrafiltre et on le diafiltre avec un lactosérum suracidifié provenant d'une fabrication de fromage à pâte molle. On diafiltre jusqu'à un pH de 5,2. On poursuit de la manière décrite à l'exemple 5 et l'on obtient une poudre présentant après reconstitution les propriétés de la Mozzarella.

**Revendications**

1. Procédé de fabrication d'un fromage en poudre pasteurisé qui présente, après reconstitution, les propriétés de la Mozzarella, dans lequel on décalcifie partiellement un lait, on ajuste son pH, on standardise sa teneur en matière grasse et on le sèche par pulvérisation, caractérisé par le fait que

— l'on prépare une solution colloïdale lactique de départ présentant des rapports protéines/lactose et protéines/calcium au moins deux fois supérieurs à ceux du lait naturel et un pH compris entre 5,0 et 5,5,
— on porte le pH de cette solution à une valeur comprise entre 6,3 et 6,4 et on la pasteurise,
— on la refroidit et l'on ramène le pH à une valeur comprise entre 5,0 et 5,5,
— et on la sèche de façon à obtenir le fromage en poudre.

2. Procédé selon la revendication 1, caractérisé par le fait que la solution colloïdale lactique de départ est obtenue par mélange dans l'eau des ingrédients secs.

3. Procédé selon la revendication 1, caractérisé par le fait que la solution colloïdale lactique de départ est obtenue par ultrafiltration d'un lait.

4. Procédé selon la revendication 1, caractérisé par le fait que l'on ajoute de la matière grasse lorsque le pH de la solution est compris entre 6,3 et 6,4 et l'on homogénéise la solution additionnée de matière grasse avant de la pasteuriser.

5. Procédé selon la revendication 4, caractérisé par le fait qu'on ajoute la matière grasse à une température de 55 à 65°C.

6. Procédé selon la revendication 3, caractérisé par le fait que l'on acidifie biologiquement un lait jusqu'à un pH de 5,8 à 6,0 et l'on laisse l'acidification biologique se poursuivre durant l'ultrafiltration, jusqu'au pH de 5,0 à 5,5.

7. Procédé selon la revendication 3, caractérisé par le fait que l'on ajuste le pH chimiquement ou biologiquement avant, pendant ou après l'ultrafiltration et/ou l'on ajuste le rapport protéines/lactose et le niveau de déminéralisation par diafiltration.

8. Procédé selon la revendication 3, caractérisé par le fait que l'on acidifie par diafiltration avec une solution de dilution acide, notamment avec un petit-lait de fromagerie.

## Patentansprüche

1. Verfahren zur Herstellung eines pasteurisierten pulverförmigen Käses, der nach der Rekonstitution die Eigenschaften von Mozzarella hat, bei welchem eine Milch teilweise entcalcifiziert, ihr pH-Wert eingestellt, ihr Fettgehalt standardisiert und sie durch Zerstäubung getrocknet wird, dadurch gekennzeichnet, daß

— eine kolloidale Ausgangsmilchlösung hergestellt wird, die Verhältnisse von Proteinen zu Lactose und Proteinen zu Calcium aufweist, die wenigstens zweimal höher als die der natürlichen Milch sind, und die einen pH-Wert zwischen 5,0 und 5,5 aufweist,
— der pH dieser Lösung auf einen Wert zwischen 6,3 und 6,4 gebracht und sie pasteurisiert wird,
— sie abgekühlt und der pH auf einen Wert zwischen 5,0 und 5,5 vermindert wird,
— und sie so getrocknet wird, daß der Käse in Pulverform erhalten wird.

2. Verfahren nach Anspruch 1, dadurch gekennzeichnet, daß die kolloidale Ausgangsmilchlösung durch Vermischung von trockenen Bestandteilen mit Wasser erhalten wird.

3. Verfahren gemäß Anspruch 1, dadurch gekennzeichnet, daß die kolloidale Ausgangsmilchlösung durch Ultrafiltration einer Milch erhalten wird.

4. Verfahren nach Anspruch 1, dadurch gekennzeichnet, daß Fett hinzugefügt wird, wenn der pH-Wert der Lösung zwischen 6,3 und 6,4 ist, und daß die mit Fett versetzte Lösung vor dem Pasteurisieren homogenisiert wird.

5. Verfahren nach Anspruch 4, dadurch gekennzeichnet, daß das Fett bei einer Temperatur von 55 bis 65° C hinzugefügt wird.

6. Verfahren nach Anspruch 3, dadurch gekennzeichnet, daß eine Milch auf einen pH-Wert von 5,8 bis 6,0 biologisch angesäuert wird und die biologische Ansäuerung während der Ultrafiltration bis auf einen pH-Wert von 5,0 bis 5,5 ablaufen gelassen wird.

7. Verfahren nach Anspruch 3, dadurch gekennzeichnet, daß der pH-Wert chemisch oder biologisch vor, während oder nach der Ultrafiltration eingestellt und/oder das Verhältnis von Proteinen zu Lactose und der Grad der Entmineralisierung durch Diafiltration eingestellt wird.

8. Verfahren nach Anspruch 3, dadurch gekennzeichnet, daß durch Diafiltration mit einer sauren Verdünnungslösung, insbesondere mit einer Käsereimolke, angesäuert wird.

## Claims

1. A process for the production of a pasteurised cheese in powder form which, after reconstitution, has the properties of Mozzarella, comprising partially decalcifying a milk, adjusting its pH-value, standardising its fat content and spray drying it, characterized by

— preparing a colloidal lactic starting solution having protein/lactose and protein/calcium ratios at least about twice as high as those of natural milk and a pH-value in the range from 5.0 to 5.5,
— adjusting the solution thus prepared to a pH-value of from 6.3 to 6.4 and pasteurising it,
— cooling the solution and returning the pH to a value of from 5.0 to 5.5 and
— drying the solution to give the cheese in powder form.

2. A process as claimed in claim 1, wherein the colloidal lactic starting solution is obtained by mixing its dry ingredients in water.

3. A process as claimed in claim 1, wherein the colloidal lactic starting solution is obtained by the ultrafiltration of a milk.

4. A process as claimed in claim 1, wherein fat is added when the pH-value of the solution is between 6.3 and 6.4, and the solution is homogenised together with the added fat before it is pasteurised.

5. A process as claimed in claim 4, wherein the fat is added at a temperature of from 55 to 65° C.

6. A process as claimed in claim 3, wherein a milk is acidified biologically to a pH-value of from 5.8 to 6.0 and the biological acidification process is left to continue during ultrafiltration to a pH-value of from 5.0 to 5.5.

7. A process as claimed in claim 3, wherein the pH-value is chemically or biologically adjusted before, during or after ultrafiltration and/or the protein/lactose ratio and the demineralisation level is adjestud by diafiltration.

8. A process as claimed in claim 3, wherein acidification is carried out by diafiltration with a dilute acid solution, for example with a cheese whey.